Europäisches Patentamt

European Patent Office

Office européen des brevets

(11) Publication number: 0 200 296
A2

# EUROPEAN PATENT APPLICATION

(21) Application number: 86301012.0

(22) Date of filing: 14.02.86

(51) Int. Cl.4: C09J 5/00

(30) Priority: 22.02.85 US 704363

(43) Date of publication of application:
10.12.86 Bulletin 86/45

(84) Designated Contracting States:
DE FR GB

(71) Applicant: LOCTITE (IRELAND) Ltd.
Whitestown Industrial Estate
Tallaght, Co. Dublin(IE)

(72) Inventor: Charnock, Ronald S.
No. 10 The Willows Castletown
Celbridge Kildare(IE)
Inventor: Melton, Mark S.
47 Windermere Drive
Biggleswade Bedfordshire(GB)

(74) Representative: Marchant, James Ian et al
Elkington and Fife High Holborn House 52/54
High Holborn
London WC1V 6SH(GB)

(54) Method and apparatus for applying a two-part curing composition to a substrate surface.

(57) An apparatus for applying to a substrate surface a curable composition consisting of two parts A and B adapted to initiate cure of the composition upon mixing, which apparatus comprises a dispensing head having a first and second extruding nozzle, each nozzle including a plurality of orifices, means for feeding parts A and B separately from respective reservoirs to the dispensing head and then to the nozzles of the first and second set respectively, the disposition of the nozzles in the dispensing head being such as to produce, on simultaneous extrusion of parts A and B through the respective first and second nozzle orifices onto a substrate surface in an extended pass, a web of composition consisting of discrete beads alternating in A B A B fashion.

Method and Apparatus for applying a two-part curing composition to a substrate surface

FIELD OF THE INVENTION

This invention relates to an improved method and apparatus for applying to a substrate surface a two-part curing composition (such as a two-part adhesive composition).

In a two-part curing composition, the two parts must be well mixed together in order that the mixture may then cure. Cure should take place only on a substrate surface or between substrates, but the mixture of parts, once made, will normally cure anywhere, e.g. in and on the mixing apparatus, in and on the applying devices, on the worktop, on the workpiece elsewhere than the intended application area, on the operater's hands and clothing. Unwanted curing is an inconvenience and can be a hazard; when the composition is a rapid curing one, these disadvantages become worse, as they do for example with two-part acrylic compositions. Nevertheless two-part acrylic curing compositions have other advantages, especially in space-filling, so that there is a great potential for their use if the said disadvantages could be overcome.

DISCUSSION OF THE PRIOR ART

It is known to apply two-part curing compositions by means of a dispensing head which incorporates a static mixer, e.g. an elongated tube into one end of which appropriate proportions of both parts are fed under pressure and repeatedly deflected by stationary baffles to produce mixing of the parts before extrusion at the other end of the tube.

This method is attended by numerous disadvantages. Thus high pressures are necessary to overcome the flow resistance of the baffles. Disposable mixing heads are often necessary. Much time is expended in cleaning down the equipment between working sessions. Pots of mixed composition have to be emptied within a working session to avoid excessive waste. Alternatively pieces of apparatus, such as dispensing heads, may be rinsed and stored in solvents, or solvents may be recirculated through mixing and pumping machinery between working sessions.

All in all, the use of static (and even dynamic) mixing with two-part curing compositions is so troublesome that there is considerable user resistance, especially to the use of the more quickly setting compositions. Nevertheless quick-setting and gap-filling two-part compositions, such as acrylate compositions, have so many advantages and possible areas of application that it is possible to identify here a large need which is not being met in practice.

It has also been known to apply a two-part curing composition "bead-on-bead", i.e., in the form of two separate parallel beads onto one substrate from two respective adjacent nozzles in a single pass. The beads commonly have diameters of 1-20mm and are applied one on top of the other or adjacent to each other with separations of 1/2 to a few mm so that on settling the beads come in contact with each other. Mixing of the two parts is accomplished when the substrate parts are pressed together, often with some relative lateral movement, the mixing occurring as the adhesive is squeezed out.

In practical application of the bead-on-bead technique, the parallel nozzles are typically spaced a predetermined distance from each other, tapered and manufactured of a readily cut plastic material such as polyethylene or any other thermoplastic. The taper allows the nozzles to be cut to a desired diameter so that sufficient adhesive is dispensed in a single pass to cover the full bond width when squeezed out. In a typical application where a metal reinforcer is bonded to a sheet metal substrate, the reinforcer width (and consequently the desired bond width) is often as wide as 2-8cm. In these kinds of applications, the bead-on-bead technique does not always give adequate mixing of the adhesive, at least at gaps of greater than 2 mm. In sheet metal bonding applications, because of the flexibility and dentability of the sheet substrate, gaps of 2-5mm are not uncommon. Therefore, there exists a need for an improved application method and device which would permit a single pass application of a two-part adhesive and give essentially complete on-part mixing even when extruded to widths of 2-8cm at bond gaps of up to 5mm or more.

SUMMARY OF THE INVENTION

The invention accordingly provides, in a first aspect, an improved method for bonding a pair of substrates with a curing composition consisting of two parts A and B, which method comprises extruding onto one substrate a sufficient quantity of the A and B compositions in a single pass to cover the entire bond width when squeezed out by application of the second substrate and applying the second substrate, wherein the improvement comprises that the components A and B are each extruded as a plurality of beads in alternating adjacent A B A B fashion. The alternating beads may be adjacent on the substrate or piled bead-on-bead or both.

In the second aspect, the invention provides apparatus for applying to a substrate surface a curing composition consisting of two parts A and B, which apparatus comprises a dispensing head having a first and second extruding nozzle, each nozzle including a plurality of orifices means for feeding parts and A and B separately from respective reservoirs to the dispensing head and then to the nozzles of the first and second set respectively, the disposition of the nozzles in the dispensing head being such as to produce, on simultaneous extrusion of parts A and B through the respective first and second nozzle orifices onto a substrate surface in an extended pass, a web of composition consisting of discrete beads alternating in A B A B fashion.

The inventive method and its preferred embodiments not only provides an improvement in bond strength over single bead-on-bead application, but surprisingly provides equivalent or better bond strengths than when the same product is dispensed through a static mixer head. These bond strength advantages are easily realized in single pass applications for bond widths of 2-8cm or more and gaps of 2 to 5mm or more.

## BRIEF DESCRIPTION OF THE DRAWINGS

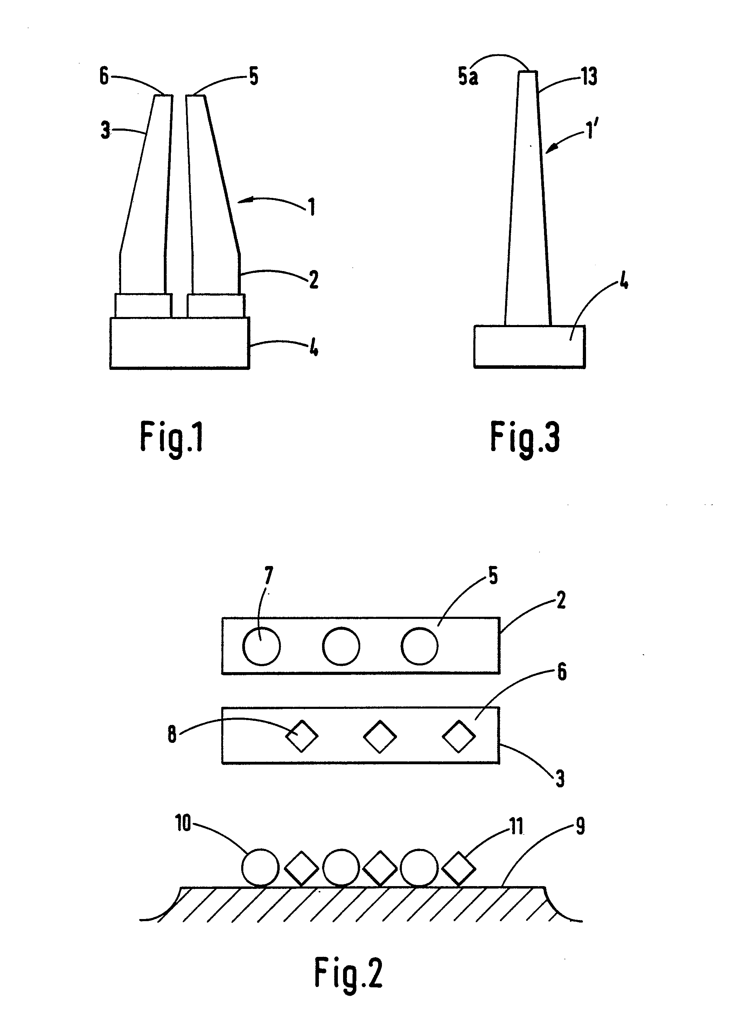

In the accompanying drawings, Figure 1 is a schematic side elevation of a first embodiment of a dispensing head; figure 2 - schematically represents, on an enlarged scale, the orifice-bearing faces of the dispensing head of Figure 1, a substrate surface and a web of composition applied thereto, all in a plane transverse of the direction of extrusion;

Figure 3 schematically represents in side elevation a second embodiment of a dispensing head;

Figure 4 schematically represents on an enlarged scale in elevation the tip or extruding end of the dispensing head of Figure 3, a transverse section of a substrate surface and a web of curing composition applied thereto by means of said dispensing head;

Figure 5 schematically represents in side elevation a third embodiment of a dispensing head; and

Figure 6 is a view of the dispensing head of Figure 5, a substrate surface and a deposited web, and is otherwise similar to Figure 4 as described.

## DETAILED DESCRIPTION OF THE INVENTION

Although the invention may be employed with any two-part curable adhesive or sealant system having two components of similar rheology which are activated by mixing just before application, it is preferred that the invention be used with matched resin acrylic systems such as those described in German published application (Offenlegunsschrift) DE 33 20 918, the disclosure of which is incorporated herein by reference. These systems typically have very fast gel times making bulk mixing especially unsuitable. Examples of other systems which may be usefully employed include epoxy/amine and epoxy/-mercaptan systems, and polyisocyanate/polyol or polyisocyanate/polyamine systems.

Referring now to the drawings, extruded beads of curing composition and extrusion nozzle orifices are represented as circles when they comprise or pertain to part A of the composition, and are represented as diamonds when they comprise or pertain to part B thereof. It will be appreciated that all the extrusion orifices and the beads on extrusion will usually have circular cross-sections. Beginning with Figure 1, a dispensing head 1 comprises a three-bore nozzle 2, a three-bore nozzle 3, and a connector 4 adapted for attachment to conventional adhesive dispensing equipment supplying nozzle 2 with part A and nozzle 3 with part B of a two-part acrylic adhesive composition. Nozzles 2,3 have respective rectangular orifice-bearing faces 5,6 with dispensing orifices, 7,8. When the faces 5,6 are aligned (as shown in Figure 2) the orifices 7 are staggered with respect to the orifices 8. Accordingly, extrusion of part A of the composition through nozzle 2 and simultaneous extrusion of part B through nozzle 3, with the dispensing head being passed over a substrate surface 9, yields a deposited web of composition consisting of beads 10 of part A and beads 11 of part B alternating in ABAB fashion across the width of the web.

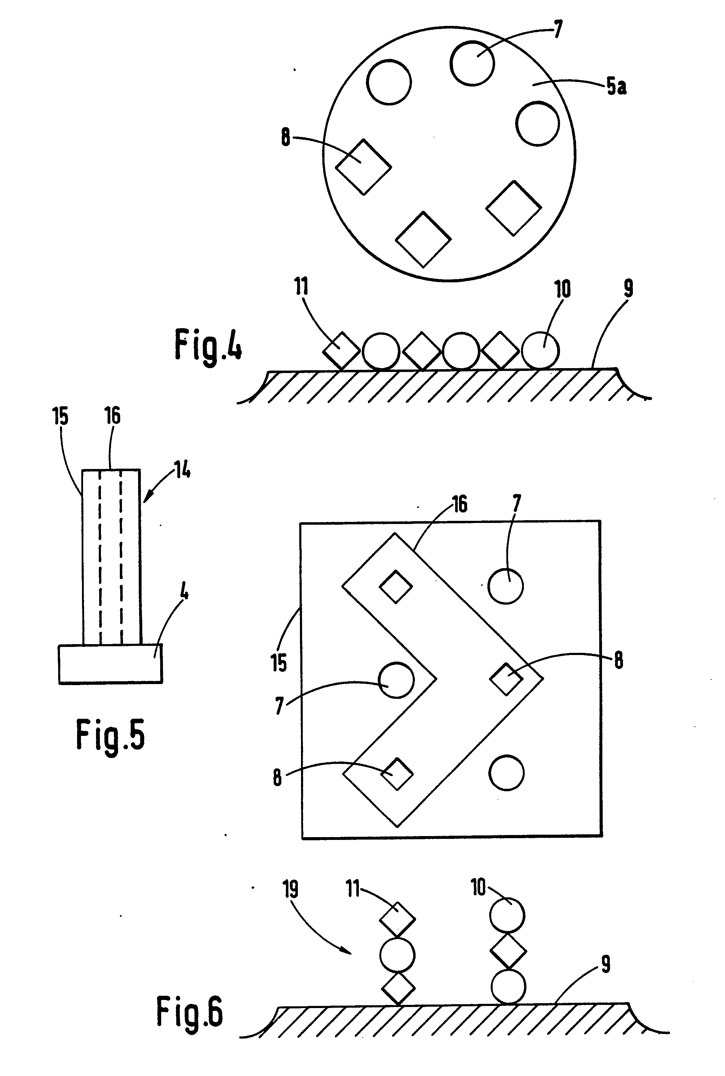

In Figures 3 and 4 is shown a dispensing head 1' comprising a single application tube 13 having six bores with three part A orifices 7 and three part B orifices 8, and a connector 4 adapted for attachment to adhesive dispensing equipment to supply orifices 7 with part A and orifices 8 with part B of the composition. The orifices 7,8 are spaced apart around the periphery of a circular orifice-bearing face 5a. With suitable orientation of the dispensing head as shown, there is obtained a deposited web of composition consisting of beads 10 of part A and beads 11 of part B alternating in ABAB fashion across the width of the web, on a substrate surface 9.

Figures 5 and 6 illustrate an applicator 14 comprising a first multiple nozzle 16 of L-shaped cross-section which fits into a shaft or channel of similar cross-section in a second multiple nozzle 15. The assembled nozzles 15,16 are adapted by means of a connector 4 for connection to a source of parts A and B respectively of an acrylic cure composition.

Use of the application 14 for extrusion onto a substrate surface 9 gives a multi-layer web 19 wherein the beads alternate in ABAB fashion across both the width and the thickness of the web.

In the use of the apparatus and performances of the method of the invention, the beads of the applied web relax and begin to coalesce under the combined effects of their own weight and fluidity. The mixing process is completed by application of a second substrate on top of the deposited web with pressure. The dispensing heads have no contact with the mixed parts of the composition and can be cleaned with a stroke of a cloth, picked up many hours later and used again without any problem in the removal of set adhesive.

The surprising improvements in bond strengths and gap filling capability of two-part adhesives dispensed in the inventive manner are illustrated by the following non-limiting example.

EXAMPLE

Loctite Steelbonder™ 341 a two-part acrylic adhesive available from Loctite (Ireland) Ltd., Tallaght, Ireland, was used to bond a pair of standard oily steel lap shear coupons (1" x 3") by three different single pass methods: (1) using a static mixer dispenser head; (2) using a single bead-on-bead dispenser head; and (3) using a multi-bead dispenser head of the invention with three A and three B outlets, geometrically arranged in a manner similar to that of Figures 6-7. The dispenser heads were cut to dispense approximately equal volumes (an amount just sufficient to squeeze a small fillet of excess adhesive out of the bond area). The adhesive was dispensed in a single pass by each method onto one of the substrates. The second substrate was then applied to give a one inch by one inch bond area at the gaps specified in Table 1. After the coupons had fixtured, they were subjected to a typical paint bake cycle as indicated in the Table followed by a determination of T-peel strengths by the standard ASTM method. The surprising results demonstrate not merely an improvement over the single bead-on-bead approach, but also equivalent or better results than the static mixing dispenser.

| Application Technique | T-Peel Strength On Astrolan Coated Mild Steel After A Paint-Bake at 185°C For 30 Mins., For Gaps Of:- | | |
|---|---|---|---|
| | 2 mm | 3 mm | 5 mm |
| Static-Mixed | 17.8 | 16.2 | 17.4 |
| Single Bead-on-Bead | 15.4 | 13.1 | 3.9 |
| Multi-Beads | 20.9 | 20.5 | 17.4 |

The invention is not limited by or to the details of the specification embodiments described, many of which can be widely varied without departing from the scope of the invention.

**Claims**

1. An improved method of bonding a pair of substrates with a curable composition consisting of two parts A and B, said parts adapted to initiate cure of the composition upon mixing thereof, which method comprises extruding onto one substrate a sufficient quantity of the A and the B compositions in a single pass to cover the entire bond width when squeezed out by application of the second substrate and applying the second substrate, wherein the improvement comprises that the components A and B are each extruded as a plurality of beads in alternating adjacent A B A B fashion.

2. A method as in Claim 1 wherein said bond width is 2-8cm.

3. A method as in Claim 1 wherein at least a portion of said substrates when squeezed together is separated by a gap of more than 2mm.

4. A method as in Claim 3 wherein at least a portion of said substrates when squeezed together is separated by a gap of 2-5mm.

5. A method as in Claim 1 wherein parts A and B of the curable composition have a similar rheology.

6. A method as in Claim 5 wherein the curable composition is an acrylic adhesive.

7. A method as in Claim 1 wherein said plurality of beads includes at least 3 each of parts A and B.

0 200 296

Fig.1

Fig.3

Fig.2

**Fig.4**

**Fig.5**

**Fig.6**